# EUROPÄISCHE PATENTSCHRIFT

(11) **EP 1 537 008 B1**
(45) Veröffentlichungstag und Bekanntmachung des Hinweises auf die Patenterteilung: **06.05.2015**
(21) Anmeldenummer: 03750493.3
(22) Anmeldetag: 06.09.2003
(51) Int. Cl.: B62D 65/00, G05B 19/401

(54) **VERFAHREN UND VORRICHTUNG ZUM HERSTELLEN EINES VERBINDUNGSBEREICHS AUF EINEM WERKSTÜCK**
METHOD AND DEVICE FOR PRODUCING A CONNECTING AREA ON A PRODUCTION PART
PROCEDE ET DISPOSITIF DE REALISATION D'UNE ZONE DE JONCTION SUR UNE PIECE

(30) Priorität: 13.09.2002 DE 10242710
(43) Veröffentlichungstag der Anmeldung: 08.06.2005
(73) Patentinhaber: VMT Vision Machine Technic Bildverarbeitungssysteme GmbH, 68219 Mannheim (DE)
(72) Erfinder: BONSE, Marcus, 70563 Stuttgart (DE); KOLB, Thomas, 89438 Holzheim (DE); OSTERTAG, Frank, 71116 Gärtringen (DE); PHILIPP, Enrico, 70199 Stuttgart (DE); STAHS, Thomas, 89081 Ulm (DE); THALER, Heiko, 71566 Althütte (DE)
(74) Vertreter: Vonnemann, Gerhard
(86) Internationale Anmeldenummer: PCT/EP2003/009919
(87) Internationale Veröffentlichungsnummer: WO 2004/026537

(56) Entgegenhaltungen:
- DE-U- 29 918 486
- US-A- 4 670 974
- US-A- 4 876 656
- US-A- 5 345 675

## Beschreibung

Die Erfindung betrifft ein Verfahren zum Herstellen eines Verbindungsbereichs auf einem Werkstück, welcher lagegenau gegenüber einem Referenzbereich auf dem Werkstück positioniert ist, nach dem Oberbegriff des Patentanspruchs 1. Weiterhin betrifft die Erfindung eine Vorrichtung zur Durchführung des Verfahrens.

Auf Fahrzeugkarosserien werden im Rohbau bzw. in der Montage in unterschiedlichen Karosseriebereichen Verbindungselemente eingebracht, an denen in der Fahrzeugmontage Anbauteile befertigt werden. Im Interesse einer qualitativ hochwertigen Anmutung der Karosserie ist es oftmals notwendig, diese Anbauteile hochgenau gegenüber Referenzbereichen auf der Karosserie bzw. gegenüber anderen Modulen auszurichten und zu positionieren. Um eine solche hochgenaue Ausrichtung der Anbauteile auf der Karosserie sicherstellen zu können, müssen die Verbindungselemente lagegenau in bezug auf die Referenzbereiche auf der Karosserie positioniert werden.

Beispielsweise müssen die Heckleuchten auf der Karosserie hochgenau gegenüber den der Leuchte benachbarten Karosserieflächen ausgerichtet werden, um knickfrei Spiegellinien und gleichmäßige Spaltmaße und Übergänge im hinteren Seitenbereich der Karosserie zu erreichen. Jede dieser Heckleuchten wird mit Hilfe von mehreren (z.B. vier) Schrauben an der Karosserie befestigt. Um also eine hochgenaue Positionierung der Heckleuchte in ihrer Aufnahme auf der Karosserie zu erreichen, müssen die entsprechenden Verbindungsbereiche auf eine solche Weise in die Karosserie eingebracht werden, daß eine hochgenaue Ausrichtung der Heckleuchte gegenüber diesen - der Heckleuchte benachbarten - Referenzbereichen gewährleistet ist.

In der Großserienfertigung werden die Verbindungsbereiche - bestehend typischerweise aus einem in das Karosserieteil eingeprägten Buckel als Anschlagfläche und ein in diesen Buckel eingestanztes Loch zum Durchführen der Befestigungsschraube - generell mit Hilfe eines robotergeführten Präge- und Stanzwerkzeugs in die Karosserie eingebracht. Die Karosserien werden dem Werkzeug auf einem Förderband.zugeführt, weswegen Lagevariationen der Karosserie gegenüber dem robotergeführten Werkzeugs auftreten. Weiterhin weisen die Karosserien aufgrund fertigungsbedingter Toleranzen Abweichungen von der soll-form auf, die beispielsweise durch ein rechnerinternes (CAD-) Modell vorgegeben ist. Um eine hochgenaue Ausrichtung der Heckleuchte gegenüber den Referenzbereichen auf der Karosserie sicherstellen zu können, ist daher ein Verfahren notwendig, mit Hilfe dessen das robotergeführte Werkzeug - unabhängig von der Form und Raumlage der jeweiligen Karosserie im Arbeitsbereich des Roboters - hochgenau gegenüber den relevanten Referenzbereichen dieser Karosserie ausgerichtet und positioniert werden kann, und welches weiterhin ein prozeßsicheres Einbringen der Verbindungsbereiche in der durch diese Referenzbereiche definierten Raumlage gestattet.

Aus der DE 299 18 486 U1 ist ein Verfahren zum lagegenauen Ausformen eines Verbindungsbereichs auf einem Karosseriebauteil mit Hilfe eines robotergeführten Präge- und Stanzwerkzeugs bekannt. Bei diesem Verfahren werden zunächst mit Hilfe eines (z.B. optischen) Sensorsystems mehrere Meßwerte des Karosseriebauteils aufgenommen; basierend auf diesen Meßwerten wird die Absolutlage des zugeführten Karosseriebauteils im Arbeitsraum des Roboters ermittelt. Weiterhin werden die Meßwerte mit einem im Steuersystem des Roboters abgelegten "Idealmodell" des zu bearbeitenden Bereiches verglichen, und das "Idealmodell" wird rechnerintern soweit verschoben, bis eine maximale Überdeckung der Konturen des "Idealmodells" mit der meßtechnisch ermittelten (Ist-)Kontur eintritt. Das robotergeführte Präge- und Stanzwerkzeug wird dann robotergesteuert entlang einer einprogrammierten Bahn gegenüber der Karosserie verfahren, im Zuge derer die Verbindungsstellen in die Karosserie eingebracht werden.

Das aus der DE 299 18 486 U1 bekannt Verfahren basiert auf der Messung der Absolutlage der Karosserie im Arbeitsraum des Roboters. Daher müssen zur erfolgreichen Anwendung dieses Verfahrens mehrere Randbedingungen erfüllt sein:
- Zunächst muß das Sensorsystem in der Lage sein, einzelne Meßwerte metrische in bezug auf sein internes Bezugskoordinatensystem zu bestimmen ("interne metrische Kalibrierung des Sensorsystems").
- Weiterhin muß die Lage des Sensorsystems im Arbeitsraum des Roboters bekannt sein ("externe metrische Kalibrierung des Sensorsystems").
- Schließlich muß das Sensorsystem in der Lage sein, mehrere Einzelmessungen der Karosserie auf eine solche Weise zu kombinieren und zu verdichten, daß die genaue Werkstücklage in bezug auf den Arbeitsraum des Roboters konsistent und prozeßsicher berechnet werden kann.

Der für die Erfüllung dieser Randbedingungen notwendige Einricht- und Kalibrieraufwand der Sensoren und des Gesamtsystems ist erfahrungsgemäß sehr hoch und nur von Experten zu leisten. Außerdem ist die hierbei geforderte Genauigkeit und Reproduzierbarkeit der Meßwerte nur durch hochwertige (und daher teuere) Sensoren zu leisten.

Die DE19930087 A1 beschreibt ein Verfahren und eine Vorrichtung zur Regelung der Vorhalteposition eines Manipulators eines Handhabungsgeräts. Die DE19930087 A1 zeigt dazu ein Werkzeug an dem vier Sensoren angeordnet sind. Die Sensoren sind auf ein Werkstück gerichtet, so dass aus den Messdaten der Sensoren Merkmale des Werkstücks erkannt und extrahiert werden können. Nach der Positionierung des Manipulators in einer gelernten Soll-Vorhalteposition bezüglich des Werkstücks wird der Manipulator während der Arbeitsphase mittels der Messdaten der Sensoren auf die Soll-Vorhalteposition geregelt.

Der Erfindung liegt somit die Aufgabe zugrunde das in der DE19930087 A1 beschriebene Verfahren in einer solchen Weise weiterzubilden, dass auf einem Werkstück mit Formfehlern Verbindungsbereiche hergestellt werden können, die eine hochgenaue Anbindung von (Anbau-) Teilen ermöglichen.

Die Aufgabe wird erfindungsgemäß durch die Merkmale der Ansprüche 1 und 8 gelöst.

Danach wird zur Positionierung des Bearbeitungswerkzeugs gegenüber der Karosserie ein Sensorsystem verwendet, das fest mit dem Werkzeug verbunden ist und mit diesem einen robotergeführten Werkzeug/Sensor-Verbund bildet. Dieser Werkzeug/Sensor-Verbund wird zunächst robotergesteuert in eine (fest einprogrammierte, von der aktuellen Lage der Karosserie unabhängige) Näherungsposition gegenüber der Karosserie gebracht und anschließend im Zuge eines Regelprozesses in eine (lagegenau gegenüber dem Referenzbereich auf der Karosserie ausgerichtete) Vorhalteposition gebracht. In dem Regelprozeß, der den Werkzeug/Sensor-Verbund von der Näherungsposition in die Vorhalteposition überführt, werden vom Sensorsystem (Ist-) Meßwerte des Referenzbereichs auf der Karosserie erzeugt; diese (Ist-)Meßwerte werden mit - in einer vorausgehenden Einrichtphase erzeugten - (Soll-)Meßwerten verglichen; anschließend wird der Werkzeug/Sensor-Verbund um einen Verschiebungsvektor (umfassend Linearverschiebungen und/oder Drehungen) verschoben, der unter Zuhilfenahme einer sogenannten "Jacobimatrix" (oder "Sensitivitätsmatrix") aus der Differenz zwischen den (Ist-) und (Soll-) Meßwerten berechnet wird. Sowohl die (Soll-) Meßwerte als auch die Jacobimatrix werden im Rahmen einer - dem eigentlichen Positionier- und Bearbeitungsvorgang vorgeschalteten - Einrichtphase für den jeweils vorliegenden Werkzeug/Sensor-Verbund in Kombination mit dem zu bearbeitenden Karosseriebereich ermittelt. Diese Einrichtphase wird im Zuge der Einstellung einer neuen Kombination aus Werkzeug, Sensorsystem, Karosserietyp und Bearbeitungsproblem einmalig durchlaufen.

Ist der Regelvorgang abgeschlossen und befindet sich der Werkzeug/Sensor-Verbund somit in der gewünschten Vorhalteposition gegenüber der Karosserie, so erfolgt die eigentliche Bearbeitung der Karosserie. Hierbei wird robotergesteuert ein vorgegebenes Bearbeitungsprogramm zum Einbringen der Verbindungsbereiche durchlaufen, bei dem als Referenzposition die im Zuge der Positionierung gefundene Vorhalteposition verwendet wird.

Der Regelungsvorgang, im Rahmen dessen das Werkzeug von der (robotergesteuert angefahrenen) Näherungsposition in die (lagegenau zum Werkstück ausgerichtete) Vorhalteposition gebracht wird, unterscheidet sich grundlegend von dem aus der aus der DE 299 18 486 U1 bekannten Positioniervorgang: Während im Verfahren der DE 299 18 486 U1 nämlich im Zuge der Positionierung die Absolutposition des Werkstücks im Arbeitsraum des Roboters ermittelt wird, die die Basis für die weitere Ausrichtung des Werkzeugs bildet, beruht das erfindungsgemäße Verfahren auf Relativmessungen, im Rahmen derer eine im Zuge der Einrichtphase hinterlegte Information - entsprechend einem Satz von (Soll-) Meßwerten des Sensorsystems über den Regelvorgang wiederhergestellt werden soll.

Dies führt zu zwei wesentlichen Vereinfachungen gegenüber dem Stand der Technik:
- Zum einen ist keine interne metrische Kalibrierung der Sensoren mehr notwendig, da die zum Einsatz kommenden Sensoren nicht mehr "messen", sondern lediglich auf eine monotone Inkrementalbewegung des Roboters mit einer monotonen Änderung ihres Sensorsignals reagieren. Dies bedeutet beispielsweise, daß bei Verwendung einer GCD-Kamera als Sensor die kamerainternen Linsenverzeichnungen nicht kompensiert werden müssen, bzw. daß bei Verwendung eines Triangulationssensors die exakte metrische Berechnung von Abstandswerten entfällt.
- Weiterhin ist keine externe metrische Kalibrierung der Sensoren mehr notwendig: Im Unterschied zum Stand der Technik muß die Lage der Sensoren nicht mehr metrisch in bezug auf den Arbeitsraum des Roboters bzw. das Koordinatensystem der Roboterhand ermittelt werden, um geeignet Korrekturbewegungen berechnen zu können. Die Sensoren müssen lediglich in einer solchen Weise am Werkzeug befestigt werden, daß sie in ihrem Fangbereich überhaupt geeignete Meßdaten des Referenzbereichs der Karosserie erfassen können.

Auf die in der Regel nur mit großem Aufwand zu ermittelnde metrische Meßfunktion kann somit bei Verwendung des erfindungsgemäßen Verfahrens vollständig verzichtet werden. Daher können auch metrisch unkalibrierte Sensoren zum Einsatz kommen, die wesentlich einfacher und somit auch billiger sind als kalibrierte Sensoren. Sowohl der instrumentelle Aufbau als auch die Einrichtung und der Betrieb des Gesamtsystem ist daher bei Verwendung des erfindungsgemäßen Verfahrens wesentlich kostengünstiger realisierbar. Die Sensordatenauswertung gestaltet sich - insbesondere bei Verwendung von punktförmig messenden Triangulationssensoren - sehr einfach und robust. Weiterhin wird bei Verwendung des erfindungsgemäßen Verfahrens die Ersteinrichtung und Warnung des Werkzeugs drastisch vereinfacht und kann auch von angelerntem Personal vorgenommen werden.

Das Ergebnis der Werkzeugpositionierung ist weiterhin unabhängig von der absoluten Positioniergenauigkeit des verwendeten Roboters, da eventuelle Roboterungenauigkeiten bei der Anfahrt der Zielposition mit ausgeregelt werden. Aufgrund der daraus resultierenden kurzen Fehlerketten ist bei Bedarf eine sehr hohe Wiederholgenauigkeit im Positionierergebnis erzielbar.

Die Anzahl der Positionsfreiheitsgrade, die mit dem erfindungsgemäßen Verfahren in der Positionierphase kompensiert werden können, ist frei wählbar und hängt nur von der Konfiguration des Sensorsystems ab. Ebenso ist die Anzahl der verwendeten Sensoren frei wählbar. Die Anzahl der bereitgestellten (skalaren) Sensorinformationen muß lediglich gleich oder größer der Anzahl der zu regelnden Freiheitsgrade sein. Insbesondere kann eine größere Zahl von Sensoren vorgegehen werden, und die redundante Sensorinformation kann verwendet werden, z.B. um Formfehler des betrachteten Karosseriebereichs besser erfassen zu können oder den Positioniervorgang in seiner Genauigkeit zu verbessern. Schließlich kann Sensorinformation aus unterschiedlichen Quellen verwendet werden (z.B. eine Kombination von CCD-Kameras und Abstandssensoren oder eine Kombination von Abstandssensoren und Kraft-Momenten-Sensoren).

Das erfindungsgemäße Verfahren kann sehr leicht auf neue Problemstellungen adaptiert werden, da lediglich die Sensordatengewinnung und -aufarbeitung, nicht aber der regelnd Systemkern adaptiert werden muß. Auf eine Nutzung von Modellwissen über die zu bearbeitenden Karosseriebereiche, das bei dem Verfahren der DE 299 18 486 U1 eine entscheidende Rolle bei der Berechnung der Absolutlage spielt, kann verzichtet werden.

Im Vergleich zu dem aus der DE 299 18 486 U1 bekannten Verfahren gestattet das erfindungsgemäße Verfahren einen wesentlich schnelleren Ausgleich von Restunsicherheiten, die bei der Positionierung des Werkzeugs gegenüber der Karosserie - aufgrund von fördertechnisch bedingten Lagefehlern der Karosserie gegenüber dem Werkzeug und/oder aufgrund von Formfehlern innerhalb des Referenzbereichs auf der Karosserie selbst (durch Bauteiltoleranzen) - auftreten können. Aufgrund der schnellen Regelung der Werkzeugposition gegenüber dem Werkstück braucht das Werkstück während des Positionier- und Bearbeitungsvorgangs nicht stationär aufgespannt sein, sondern es kann (beispielsweise auf einem Montageband oder einer anderen geeigneten Fördertechnik) gegenüber dem Roboter bewegt werden. Dies ermöglicht eine hohe Flexibilität des erfindungsgemäßen Verfahrens, das somit auf unterschiedlichste Anwehdungsfälle der Bearbeitung und/oder Messung von stationären und bewegten Werkstücken anwendbar ist.

Das geregelte Anfahren der Vorhalteposition kann in einer einzigen Regelschleife erfolgen; vorteilhafterweise wird dabei jedoch ein iteratives Verfahren eingesetzt, bei dem Schwellwerte als Abbrüchkriterien vorgegeben werden: So wird der Iterationsvorgang abgebrochen, wenn die Abweichung zwischen dem (Soll-)Meßwert und dem (Ist-)Meßwert unterhalb eines vorgegebenen Schwellwerts liegt; weiterhin wird der Iterationsvorgang abgebrochen, wenn die bei aufeinanderfolgenden Iterationsschritten zu erreichende Reduktion der Abweichung zwischen (Soll-)Meßwert und (Ist-)Meßwert unterhalb eines weiteren vorgegebenen Schwellwerts liegt.

Die Positionierung des Werkzeug/Sensor-Verbunds sowie die Bearbeitung der Karosserie durch das Werkzeug kann entweder sequentiell nacheinander oder auch überlappend zueinander erfolgen. Somit können bei Verwendung des erfindungsgemäßen Verfahrens auf einfache Weise Lage- und Formfehler von Karosserien vor oder während der Bearbeitung kompensiert werden. Somit ist das Verfahren auch bei der Bearbeitung bewegter Karosserien einsetzbar. In diesem Fall muß jedoch im Werkzeug/Sensor-Verbund das Sensorsystem in einer solchen Weise gegenüber dem Werkzeug angeordnet sein, daß das Sensorsystem auch während der Bearbeitungsphase in einer solchen Weise gegenüber dem Referenzbereich auf der Karosserie ausgerichtet ist, daß nutzbare (Ist-)Meßwerte aufgenommen werden können.

Weitere vorteilhafte Ausgestaltungen der Erfindung sind den Unteransprüchen zu entnehmen. Im folgenden wird die Erfindung anhand zweier in den Zeichnungen dargestellter Ausführungsbeispiele näher erläutert; dabei zeigen:
- Fig. 1: einen Heckausschnitt einer Fahrzeugkarosserie in perspektivischen Darstellung;
- Fig. 2: eine schematische Seitenansicht eines Werkzeug/-Sensor-Verbunds in einer Vorhalteposition gegenüber der Fahrzeugkarosserie;
- Fig. 3: eine schematische Darstellung einer Verfahrbahn einer Roboterhand bei der Abarbeitung einer Bearbeitungsaufgabe;
- Fig. 4: eine schematische Darstellung ausgewählter Stellungen des Werkzeug/Sensor-Verbunds beim Durchlaufen des Verfahrensablaufs der Figur 3: Fig. 4a: Rückzugsposition Fig. 4b: Näherungsposition Fig. 4c: Vorhalteposition Fig. 4d: Bearbeitungsposition
- Fig. 5: eine Aufsicht auf eine vordere Stirnwand einer Fahrzeugkarosserie ... Fig. 5a ... vor Einbau eines Cockpitmoduls; Fig. 5b ... mit eingebautem Cockpitmodul;
- Fig. 6: eine schematische Darstellung eines robotergeführten Werkzeug/Sensor-Verbunds bei der Bearbeitung des Karosseriebereichs der Figur 5a.

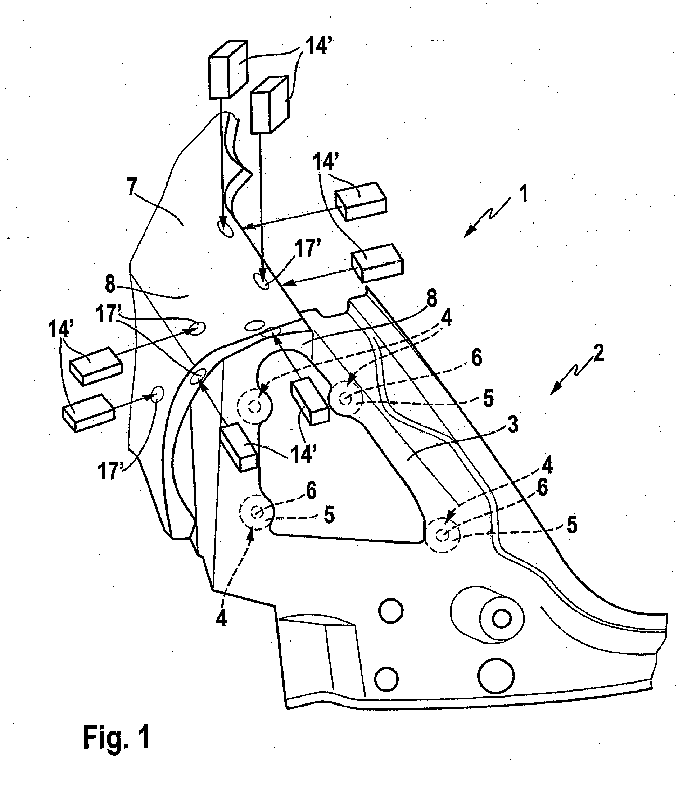

Figur 1 zeigt einen Heckausschnitt 2 einer Rohbau-Fahrzeugkarosserie 1 mit einem Heckleuchtenbereich 3, in dem eine (in Figur 1 nicht gezeigte) Heckleuchte montiert werden soll. Zur lagegenauen Montage der Heckleuchte sind im Heckleuchtenbereich 3 vier (in Figur 1 gestrichelt angedeutete) Verbindungsbereiche 4 vorgesehen, an denen die Heckleuchte durch Schraubverbindungen befestigt werden soll. Jeder Verbindungsbereich 4 umfaßt eine eingeprägte Anschlagfläche 5, an der die Heckleuchte im Einbauzustand anliegt, und ein gestanztes Loch 6 zur Durchführung einer Befestigungsschraube. Die Relativlage der vier Anschlagflächen 5 und der vier Löcher 6 ist definiert durch die Geometrie der einzubauenden Heckleuchte und ist daher (für einen vorgegebenen Karosserietyp konstant.

Um einen qualitativ hochwertigen optischen Eindruck der Karosserie 1 sicherzustellen, muß die Heckleuchte lagegenau (in bezug auf Position und Winkellage) gegenüber einem dem Heckleuchtenbereich 3 benachbarten Seitenwandbereich 7 der Karosserie 1 ausgerichtet werden; dies bedeutet, daß die vier Verbindungsbereiche 4 (bestehend aus je einer Anschlagfläche 5 und einem Stanzloch 6) hochgenau gegenüber diesem Seitenwandbereich 7 und dem Heckleuchtenbereich 3 positioniert werden müssen. Der Seitenwandbereich 7 und der Heckleuchtenbereich 3 zusammen bilden somit einen sogenannten Referenzbereich 8 zur Ausrichtung des Werkzeugs 9 gegenüber der Karosserie 1.

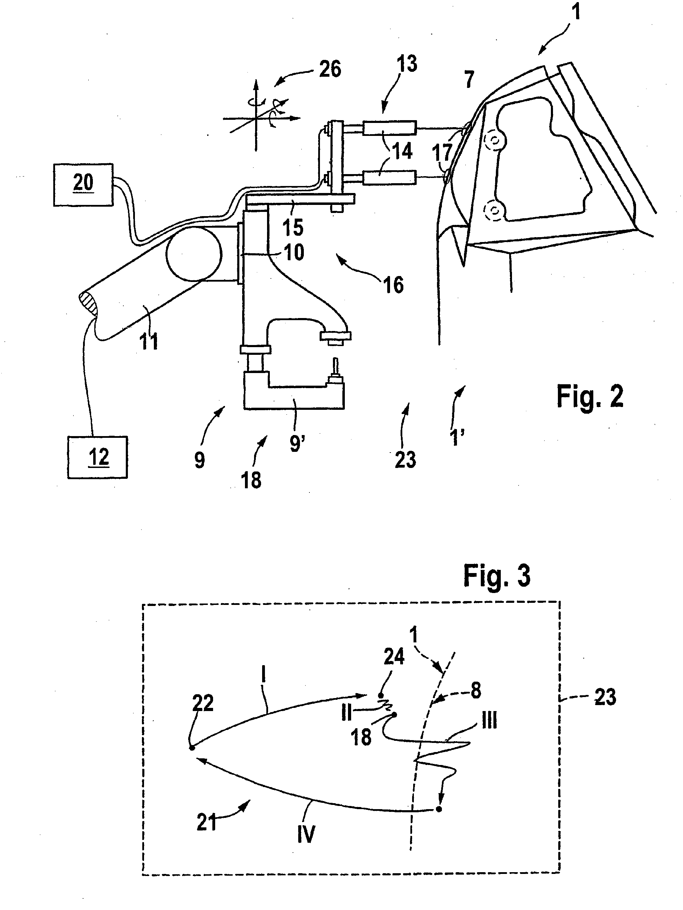

Zur Herstellung der Verbindungsbereiche 4 wird ein (schematisch in Figur 2 dargestelltes) robotergeführtes Präge-/Stanzwerkzeug 9 mit einer Präge/Stanzzange 9' eingesetzt, mit Hilfe derer der Verbindungsbereich 4 (d.h. Anschlagfläche 5 und Loch 6) in einem einzigen Verfahrensschritt erzeugt werden kann; Einzelheiten in bezug auf den Aufbau und die Wirkungsweise eines solchen Präge/Stanzwerkzeugs 9 sind beispielweise in der DE 299 18 486 U1 beschrieben. Dieses Präge-/Stanzwerkzeug 9 ist an der Hand 10 eines Industrieroboters 11 befestigt, der mit einer Steuervorrichtung 12 zur Lagesteuerung der Roboterhand 10 sowie zur Bewegungssteuerung des Präge-/Stanzwerkzeugs 9 versehen ist. Zur Vermessung der Lage und Ausrichtung des Heckleuchtenbereichs 3 und der benachbarten Seitenwandbereiche 7 trägt die Roboterhand 10 weiterhin ein Sensorsystem 13 mit mehreren (in der schematischen Darstellung der Figur 2 zwei) Sensoren 14, die über ein Gestänge 15 starr mit dem Präge-Stanzwerkzeug 9 verbunden sind und somit mit dem Werkzeug 9 eine bauliche Einheit, den sogenannte Werkzeug/Sensor-Verbund 16 bilden. Mit Hilfe dieses Sensorsystems 13 wird - wie weiter unten beschrieben wird - das Präge-/Stanzwerkzeug 9 in einem iterativen Regelvorgang gegenüber dem Seitenwandbereich 7 und dem Heckleuchtenbereich 3 als Referenzbereichen 8 ausgerichtet.

Soll das Präge-/Stanzwerkzeug 9 auf eine neue Bearbeitungsaufgabe - beispielsweise die Bearbeitung eines neuen Fahrzeugtyps oder eines neuen Bereichs auf der Karosserie 1-eingestellt werden, so muß zunächst eine sogenannte Einrichtphase durchlaufen werden, in der ein geeignetes Sensorsystem 13 ausgewählt und mit dem Werkzeug 9 zu einem Werkzeug/Sensor-Verbund 16 konfiguriert wird. Im Anschluß daran werden (Soll-) Meßwerte dieses Sensorsystems 13 in den Referenzbereichen 8 aufgenommen. Nach Beendigung der Einrichtphase steht der so konfigurierte und eingemessene Werkzeug/Sensor-Verbund 16 nun zum Serieneinsatz bereit, in der für jede dem Arbeitsraum 23 des Roboters 11 zugeführte Karosserie 1 eine sogenannte Arbeitsphase durchlaufen wird. Im folgenden werden diese beiden unterschiedlichen Phasen dargestellt:

### Einrichtphase:

Zur Lösung einer neu gestellten Bearbeitungsaufgabe wird in einem ersten Schritt zunächst ein der Bearbeitungsaufgabe angepaßtes Sensorsystem 13 ausgewählt. Dieses Sensorsystem 13 wird in einer (frei gewählten) Vorhalteposition 18 des Werkzeugs/Sensor-Verbunds an der Roboterhand 10 befestigt und in einer solchen Weise gegenüber einer ("Master"-) Karosserie 1' im Arbeitsraum 23 des Roboters 11 ausgerichtet, daß die Sensoren 14 auf geeignete, der jeweiligen Bearbeitungsaufgabe angepaßte Referenzbereiche 8' der Karosserie 1' gerichtet sind.

In Figur 2 ist der Werkzeug/Sensor-Verbund 16 in der Vorhalteposition 18 gegenüber der Karosserie 1' gezeigt. Die beiden Sensoren 14 sind dabei auf Ausschnitte 17 des Referenzbereichs 8' auf der Karosserie 1' gerichtet, die so ausgewählt sind, daß sie von besonders höher Bedeutung für die Lage und Ausrichtung der mit dem Werkzeug 9 zu bearbeitenden Bereiche sind. Im konkreten Ausführungsbeispiel der Bearbeitung des Heckleuchtenbereichs 3 (Figur 1) wird als Sensorsystem 13 ein Zusammenbau von acht optischen (Triangulations-) Sensoren 14' verwendet, die auf unterschiedliche Ausschnitt 17' der hinteren Seitenwand 7 und des Heckleuchtenbereichs 3 gerichtet sind. Die Sensoren 14,14' liefern Meßwerte, welche Abstandswerten zwischen dem jeweiligen Einzelsensor 14,14' und der dem Sensor 14,14' gegenüberliegenden Umgebung 17,17' des Referenzbereichs 8 entsprechen. Die Zahl der Einzelsensoren 14,14' sowie die Umgebungen 17,17', auf die sie ausgerichtet sind, werden in einer solchen Weise ausgewählt, daß sie eine bestmögliche Charakterisierung der für den jeweiligen Anwendungsfall relevanten Referenzfläche 8' (in diesem Fall der hinteren Seitenwand 7 und des Heckleuchtenbereichs 3) gestatten.

Das mit dem Werkzeug 9 starr verbundene Sensorsystem 13 wird nun in dieser Vorhalteposition 18 mit Hilfe des Roboters 11 auf den Referenzbereich 8' der Karosserie 1' "eingelernt". Hierbei werden zunächst die (Soll-)Sensormeßwerte in der Vorhalteposition 18 aufgenommen. Anschließen wird - ausgehen von der Vorhalteposition 18 - mit Hilfe des Roboters 11 die Lage des Werkzeug/Sensor-Verbunds 16 gegenüber der Karosserie 1 entlang bekannter Verfahrbahnen - wie in Figur 2 durch Pfeile 26 angedeutet - systematisch verändert; in der Regel sind dies Inkrementalbewegungen des Roboters 11 in seinen Freiheitsgraden. Die dabei auftretenden Veränderungen der Meßwerte der Sensoren 14 werden (vollständig oder in Teilen) aufgezeichnet. Aus diesen Sensorinformationen wird - in bekannter Weise - eine sogenannte Jacobimatrix (Sensitivitätsmatrix) errechnet, die den Zusammenhang zwischen den Inkrementalbewegungen des Roboters 11 und den dabei auftretenden Änderungen der Sensormeßwerte beschreibt. Das Verfahren zur Ermittlung der Jacobimatrix ist beispielsweise beschrieben in "A tutorial on visual servo control" von S. Hutchinson, G. Hager und P. Corke, IEEE Transactions on Robotics and Automation 12 (5), Oktober 1996, Seiten 651-670. In diesem Artikel sind auch die Anforderungen an die Verfahrwege bzw. die Meßumgebungen beschrieben (Stetigkeit, Monotonie, ...), die erfüllt sein müssen, um eine gültige Jacobimatrix zu erhalten. - Das Werkzeug 9 ist in einer solchen Weise auf der Roboterhand 10 angebracht, daß während dieses Einrichtvorgangs keine Kollisionen des Werkzeugs 9 mit der Karosserie 1 auftreten können.

Die in der Einrichtphase erzeugten Soll-Werte und die Jacobimatrix werden in einer Auswerteeinheit 20 des Sensorsystems 13 abgelegt und bilden die Grundlage für den späteren Regelvorgang in der Positionierphase.

Weiterhin wird in der Einrichtphase eine Verfahrbahn 21 der Roboterhand 10 (und somit des Werkzeug/Sensor-Verbunds 16) generiert, die in der späteren Arbeitsphase gesteuert durchlaufen wird. Diese Verfahrbahn 21 ist schematisch in Figur 3 dargestellt. Den Ausgangspunkt der Verfahrbahn 21 bildet eine sogenannte "Rückzugsposition" 22, die so gewählt ist, daß eine neue Karosserie 1 in den Arbeitsraum 23 des Roboters 11 eingeführt werden kann, ohne daß Kollisionen der Karosserie 1 mit dem Werkzeug 9 bzw. dem Sensorsystem 13 auftraten können. Ausgehend von dieser Rückzugsposition 22 umfaßt die Verfahrbahn 21 vier separate Abschnitte:
I. Der Werkzeug/Sensor-Verbund 16 wird auf einer gesteuert zu durchlaufenden Bahn I von der Rückzugsposition 22 in eine sogenannte "Näherungsposition" 24 gebracht, die so gewählt ist, daß alle Einzelsensoren 14 des Sensorsystems 13 gültige Meßwerte in den Ausschnitten 17 des Referenzbereichs 8 erfassen können.
II. Der Werkzeug/Sensor-Verbund 16 wird auf einer geregelt zu durchlaufenden Bahn II von der Näherungsposition 24 in die (wie oben beschrieben "eingelernte") Vorhalteposition 18 gebracht, in der der Werkzeug/Sensor-Verbund 16 lage- und winkelgenau gegenüber dem Referenzbereich 8 der Karosserie 1 ausgerichtet ist.
III. Der Werkzeug/Sensor-Verbund 16 wird auf einer gesteuert zu durchlaufenden Bahn III von der Vorhalteposition 18 an diejenigen Bearbeitungsbereiche (z.B. Stellen 4 des Heckleuchtenbereichs 3) geführt, an denen die Verbindungsstellen 4 erzeugt werden. An jeder Verbindungsstelle 4 wird die Präge-/Stanzzange 9' aktiviert, um in dieser Stellung eine Anschlagfläche 5 zu prägen und ein Loch 6 zu stanzen. Dieser Teil III der Verfahrbahn kann beispielsweise durch in Teach-In-Verfahren an einem Masterteil eingelernt werden.
IV. Der Werkzeug/Sensor-Verbund 16 wird auf einer Bahn IV gesteuert in die Rückzugsposition 22 zurückbewegt.

Die im Rahmen der Einrichtphase erzeugte Verfahrbahn 21 besteht somit aus drei gesteuert zu durchlaufenden Abschnitten I, III und IV sowie einem geregelt zu durchlaufenden Abschnitt II.

### Arbeitsphase

In der Arbeitsphase werden dem Arbeitsraum 23 des Roboters 11 sequentiell Karosserien 1 zugeführt, und für jede Karosserie 1 wird die in der Einrichtphase generierte Verfahrbahn 21 durchlaufen.

### Verfahrbahn-Abschnitt I:

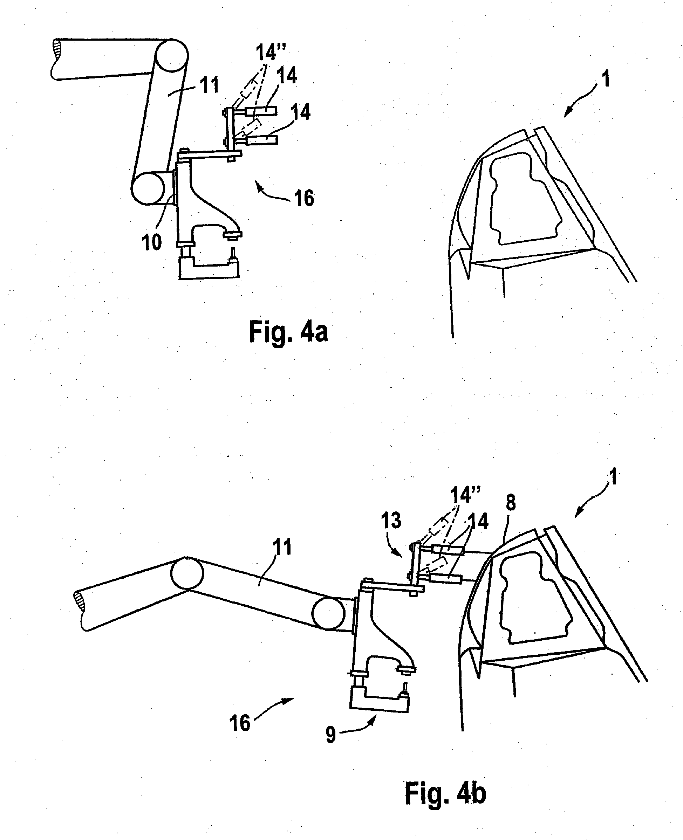

Während des Zuführens der neuen Karosserie 1 befindet sich der Werkzeug/Sensor-Verbund 16 in der Rückzugsposition 22 (siehe Figur 4a). Sobald die neue Karosserie 1 in den Arbeitsraum 23 hineinbewegt worden ist, wird der Werkzeug/Sensor-Verbund 16 an der Roboterhand 10 gesteuert in die Näherungsposition 24 bewegt (siehe Figur 4b).

### Verfahrbahn-Abschnitt II (Positionierphase):

Ausgehend von der Näherungsposition 24 wird eine Positionierphase (Bahnabschnitt II in Figur 3) durchlaufen, im Rahmen derer der Werkzeug/Sensor-Verbund 16 in die (während der Einlernphase eingelernte) Vorhalteposition 18 gegenüber der Karosserie 1 gebracht und dabei lagegenau gegenüber dem Referenzbereich 8 der Karosserie 1 ausgerichtet wird. Hierzu werden durch die Sensoren 14 des Sensorsystems 13 Meßwerte des Referenzbereichs 8 aufgenommen. Mit Hilfe dieser Meßwerte und der aus der Einrichtphase bekannten Jacobimatrix wird ein Bewegungsinkrement (Verschiebungsvektor) berechnet, das die Differenz zwischen den aktuellen (Ist-) Sensormeßwerten und den (Soll-) Sensormeßwerten verkleinert. Der Werkzeug/Sensor-Verbund 16 wird dann mit Hilfe des Roboters 11 um dieses Bewegungsinkrement verschoben und/oder geschwenkt, und während der laufenden Bewegung werden neue (Ist-) Sensormeßwerte aufgenommen.

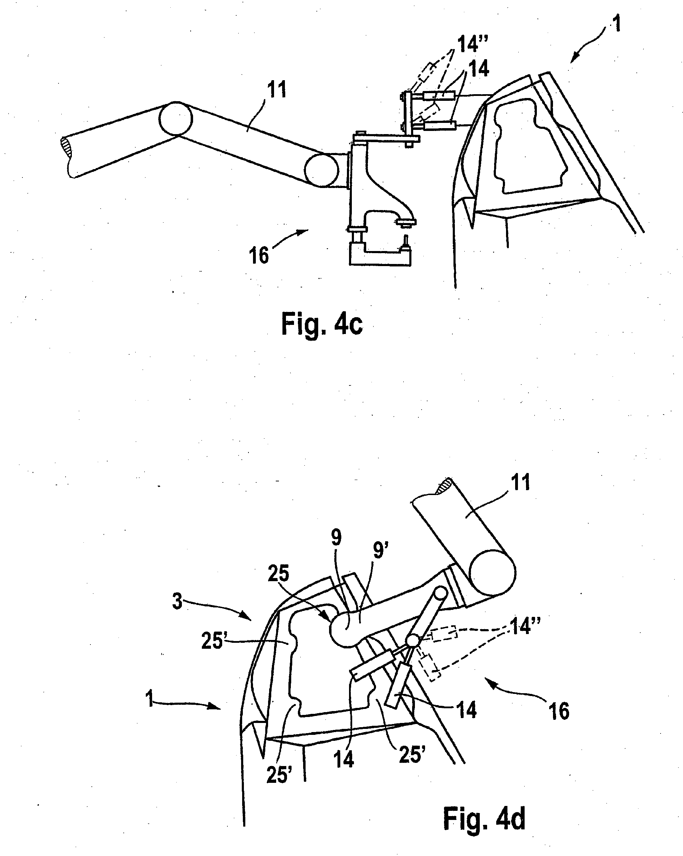

Dieser iterative Meß- und Verschiebe-Vorgang wird in einer Regelschleife so lange wiederholt, bis die Different wischen den aktuellen (Ist-) und den angestrebten (Soll-) Sensormeßwerten ein vorgegebenes Fehlermaß unterschreitet, oder bis sich diese Differenz nicht mehr über einen im Vorfeld festgesetzten Schwellenwert hinaus ändert. Der Werkzeug/Sensor-Verbund 16 befindet sich nun (im Rahmen der durch Fehlermaß bzw. Schwellenwert vorgegebenen Genauigkeit) in der (in Figur 4c dargestellten) Vorhalteposition 18 gegenüber dem Referenzbereich 8 auf der Karosserie 1.

Durch die in der Positionierphase durchlaufene iterative Minimierung werden sowohl Ungenauigkeiten der Karosserie 1 bezüglich ihrer Lage und Ausrichtung im Arbeitsraum 23 des Roboters 11 als auch eventuell vorhandene Formfehler der Karosserie 1 (bzw. im Referenzbereich 8) simultan kompensiert. Zur separaten Erkennung und Bewertung von Formfehler können zusätzliche Sensoren 14 vorgesehen werden, deren Meßwerte ausschließlich oder teilweise zur Erfassung der Formfehler verwendet werden. Weiterhin können die Meßwerte der Einzelsensoren 14 mit unterschiedlichen Gewichtungsfaktoren versehen werden, um eine gewichtete Lageoptimierung des Werkzeug/Sensor-Verbunds 16 gegenüber dem Referenzbereich 8 der Karosserie 1 herbeizuführen.

Die im Rahmen des Regelvorgangs der Positionierphase erfolgte Lage- und Winkelverschiebung des Werkzeug/Sensor-Verbunds 16 (entsprechend der Verschiebung zwischen der Näherungsposition 24 und der Vorhalteposition 18) kann in Form einer sogenannten Nullpunktskorrektur an das Steuersystem 12 des Roboters 11 weitergegeben werden. Das Steuersystem 12 des Roboters 11 kennt somit die (der Vorhalteposition 18 entsprechende) Ausgangslage, von der aus die Bearbeitungsphase beginnen soll. Eine wichtige Eigenschaft dieser Positionierphase ist ihre Unabhängigkeit von der Robotergenauigkeit: Da der Positioniervorgang auf einem iterativen Vergleich der (Ist-) Meßwerte mit (Soll-) Meßwerten beruht, wird jede Positionierungenauigkeit des Roboters 11 sofort durch den iterativen Regelprozeß kompensiert.

(Bemerkung: Falls der Referenzbereich 8 der nun im Arbeitsraum 23 des Roboters 11 befindlichen Karosserie 1 bezüglich Lage und Form mit dem Referenzbereich 8' der ("Master"-) Karosserie 1' übereinstimmt, anhand derer das System in der Einrichtphase eingelernt wurde, so stimmt die Näherungsposition 24 mit der Vorhalteposition 18 überein, so daß keine Nullpunktskorrektur des Werkzeug/Sensor-Verbunds 16 notwendig ist.)

### Verfahrbahn-Abschnitt III (Bearbeitungsphase):

In der nun folgenden eigentlichen Bearbeitungsphase wird der Werkzeug/Sensor-Verbund 16 - ausgehend von der Vorhalteposition 18 - gesteuert entlang der vorprogrammierten Bearbeitungsbahn (Bahnabschnitt III in Figur 3) bewegt. Im vorliegenden Ausführungsbeispiel wird der Werkzeug/Sensor-Verbund 16 zunächst in eine solche Position gebracht, daß die Präge-/Stanzzange 9' in einer ersten Bearbeitungsstelle 25 des Heckleuchtenbereichs 3 zu liegen kommt (siehe Figur 4d). Dann wird das die Präge-/Stanzzange 9' gesteuert aktiviert, so daß die Anschlagfläche 5 ausgeformt und das Loch 6 ausgestanzt wird. Danach werden nacheinander die drei weiteren Bearbeitungsstellen 25' des Heckleuchtenbereichs 3 angefahren und mit Anschlagflächen 5 und Stanzlöchern 6 versehen.

### Verfahrbahn-Abschnitt IV:

Nach Beendigung der Bearbeitungsphase III wird der Werkzeug/Sensor-Verbund 16 gesteuert in die Rückzugsposition 22 zurückbewegt. Nun kann die bearbeitete Karosserie 1 aus dem Arbeitsraum 23 des Roboters 11 entfern und eine neue Karosserie 1 zur Bearbeitung zugeführt werden.

Zur Kommunikation zwischen der Auswertereinheit 20 des Sensor-systems 13 und der Steuereinheit 12 des Roboters 11 wird im vorliegenden Ausführungsbeispiel vorteilhafterweise eine TCP/IP-Schnittstelle eingesetzt, die eine hohe Datenrate ermöglicht. Eine solche hohe Datenrate ist notwendig, um eine Regelung des Gesamtsystems (Sensorsystem/Roboter) in sechs Freiheitsgrade mit acht Einzelsensoren 14' im Interpolationstakt des Roboters 11 (typischerweise 12 Millisekunden) bewältigen zu können. Für Regelungsprobleme geringerer Komplexität - d.h. bei niedrigeren Anforderungen an die Genauigkeit und längeren Regelzeiten - kann die Regelung auch über eine konventionelle serielle Schnittstelle realisiert werden.

Das Ausführungsbeispiel der Figur 1, bei dem acht auf unterschiedliche Bereiche 8 der Karosserie 1 gerichtete optische Abstandssensoren (Triangulationssensoren) 14' zur Positionierung des Werkzeug/Sensor-Verbunds 16 verwendet werden, ist so ausgelegt, daß die zulässigen Maximalwerte für die Positions-korrektur (und somit die maximal zulässige räumliche Differenz zwischen der gesteuert angefahrenen Näherungsposition und der geregelt angefahrenen Vorhalteposition) translatorisch in X, Y, und Z jeweils 5 mm und in jedem der drei Raumwinkeln 1° betragen. Dies bedeutet, daß die Karosserie 1 mit einer höheren Genauigkeit als diese Maximalabweichungen in den Arbeitsraum 23 des Roboters 11 zugeführt werden muß. Als ein geeignetes Abbruchkriterium für den Regelvorgang bei der Positionierphase haben sich dabei Schwellwert von 0,1 mm bis 0,2 mm für die translatorische (X-, Y-, Z-) Abweichung und von 0,03° für die rotatorischen Abweichung herausgestellt.

In der bisherigen Beschreibung wurde der Spezialfall der Bearbeitung des Heckleuchtenausschnitts 2 auf einer Karosserie 1 beschrieben, wobei der robotergeführte Werkzeug/Sensor-Verbund 16 hochgenau gegenüber dem benachbarten Seitenwandbereich 7 und dem Heckleuchtenbereich 3 als Referenzbereichen 8 ausgerichtet wird. Selbstverständlich können als Referenzbereiche zur Ausrichtung des Werkzeug/Sensor-Verbunds 16 am Heckausschnitt 2 auch andere Karosseriebereiche (z.B. benachbarter Kofferraumausschnitt, Stoßfängeraufnahme etc.) verwendet werden. Weiterhin ist das Verfahren auf die Bearbeitung beliebiger anderer Karosseriebereiche (Befestigungsbereich für Stoßstange, Frontmodul, ...) übertragbar, welche lagegenau relativ zu einem Referenzbereich 8 bearbeitet werden müssen. Schließlich beschränkt sich das Vorfahren nicht auf die Bearbeitung von Karosserien 1, sondern ist grundsätzlich auf beliebige Fertigungsprobleme anwendbar, bei denen ein robotergeführtes Bearbeitungswerkzeug 9 ortsrichtig gegenüber einem Referenzbereich 8 eines Werkstücks positioniert werden soll.

Weiterhin ist es möglich, mit Hilfe eines und derselben robotergeführten Bearbeitungswerkzeugs 9 die Heckleuchtenbereiche 3 unterschiedlicher Karosserietypen zu bearbeiten, die bezüglich ihrer geometrischen Gestaltung (Form und Lage der Referenzbereiche 8, Anzahl und Lage der Verbindungsbereiche 4 etc.) sehr unterschiedlich sein können. In diesem Fall umfaßt das Sensorsystem 13 neben den Sensoren 14 (welche für die Positionierung des Werkzeug/Sensor-Verbunds 16 gegenüber dem ersten Karosserietyp 1 verwendet werden) weitere Sensoren 14" vorgesehen, mit Hilfe derer der Werkzeug/Sensor-Verbund 16 gegenüber den Referenzbereichen des zweiten Karosserietyps positioniert wird; dieser zweite Satz von Sensoren 14" ist in der schematischen Darstellung der Figuren 4a bis 4d gestrichelt angedeutet. Die für die Positionierung des Werkzeug/Sensor-Verbunds 16 gegenüber dem zweiten Karosserietyp verwendeten Sensoren 14" können sich bezüglich ihrer Zahl, ihrer räumlichen Ausrichtung, ihres Meßprinzips etc. stark gegenüber den Sensoren 14 unterscheiden. Wird dem Arbeitsraum 23 eine Karosserie 1 des ersten Typs zugeführt, so wird der Werkzeug/Sensor-Verbund 16 aus der Rückzugsposition 22 in die oben beschriebene Näherungsposition 24 verfahren, in der (wie in Figur 4b gezeigt) die Sensoren 14 auf die Referenzbereiche 8 gerichtet sind; der anschließend Positioniervorgang verwendet die Meßwerte der Sensoren 14, um den Werkzeug/Sensor-Verbunds 16 in die Vorhalteposition 18 zu bringen (siehe Figur 4c), woraufhin die dem ersten Karosserietyp entsprechende Bearbeitungsphase durchlaufen wird. Wird hingegen dem Arbeitsraum 23 eine Karosserie des zweiten Typs zugeführt, so wird der Werkzeug/Sensor-Verbund 16 aus der Rückzugsposition 22 in eine (in Figur 4b nicht gezeigte) Näherungsposition Verfahren, in der die Sensoren 14" auf die relevanten Referenzbereiche des zweiten Karosserietyps gerichtet sind; im anschließenden Positioniervorgang werden die Meßwerte der Sensoren 14" verwendet, um den Werkzeug/Sensor-Verbunds 16 in die diesem Karosserietyp entsprechende Vorhalteposition zu bringen, und dann wird die dem zweiten Karosserietyp entsprechende Bearbeitungsphase durchlaufen. Die Sensorgruppen 14 und 14" brauchen dabei nicht disjunkt zu sein, sondern es ist durchaus möglich, einige der Sensoren 14,14" zur Positionierung sowohl gegenüber dem ersten Karosserietyp als auch gegenüber dem zweiten Karosserietyp zu verwenden.

Neben der Bearbeitung unterschiedlicher Karosserietypen mit einem gemeinsamen Werkzeug/Sensor-Verbund 16 mit Sensorgruppen 14 und 14" ist es auch möglich, unterschiedliche Bereiche (z.B. Heckleuchtenbereich 3 und Befestigungsbereich der Stoß-stange) ein und desselben Karosserietyps mit einem gemeinsamen Werkzeug/Sensor-Verbund 16 zu bearbeiten. Dann wird die Gruppe der Sensoren 14 zur Positionierung des Werkzeug/Sensor-Verbunds 16 gegenüber dem Referenzbereich 8 des Heckleuchtenbereichs 3 verwendet, während die Gruppe der Sensoren 14" zur Positionierung des Werkzeug/Sensor-Verbunds 16 gegenüber dem Referenzbereich der Stoßstange verwendet wird, und in den jeweiligen Bearbeitungsphasen werden die zu den unterschiedlichen Bereichen gehörigen Bearbeitungsphasen durchlaufen.

Bisher wurde ein Anwendungsfall betrachtet, bei dem die Karosserie 1 dem Arbeitsraum 23 des Roboters 11 mit Hilfe einer geeigneten Fördertechnik (beispielsweise auf einem Transportschlitten auf einer Rollenbahn) zugeführt wird, dann jedoch aus der Fördertechnik ausgekoppelt wird und sich daher während der Werkzeugpositionierung und Bearbeitung in einer stationären Lage gegenüber dem Arbeitsraum 23 befindet. Eine solche stationäre Lagerung der Karosserie 1 gegenüber dem Arbeitsraum 23 ist allerdings nicht notwendig: Die oben beschriebene schnelle Regelung der Werkzeugposition kann auf eine solche Weise modifiziert werden, daß die Sensoren 14 Lageänderungen der Karosserie 1 on-line kompensieren, so daß der Werkzeug/Sensor-Verbund der Karosserie 1 folgt. In diesem Fall wird die Präge-/Stanzzange 9' des Präge/Stanzwerkzeugs 9 verschieblich und/oder schwenkbar gegenüber der Roboterhand 10 gelagert, so daß die Präge-/Stanzzange 9' gegenüber dem Sensorsystem 13 gesteuert verschoben und/oder geschwenkt werden kann. Eine solche bewegliche Lagerung der Präge-/Stanzzange 9' gestattet es, die Bearbeitungsphase (Abschnitt III) in einer solchen Lage des Werkzeug/Sensor-Verbunds 16 durchzuführen, daß das Sensorsystem 13 - unabhängig von dem Fortschritt des Bearbeitungsvorgangs - auf den Referenzbereich 8 der Karosserie 1 ausgerichtet ist. Da das Sensorsystem 13 während der gesamten Bearbeitungsphase auf den Referenzbereich 8 der Karosserie 1 ausgerichtet ist, können Lage-und Ausrichtungsänderungen der Karosserie 1 prozeßbegleitend erkannt werden; die Lage und Ausrichtung des Werkzeug/Sensor-Verbunds kann dann durch Anwendung des obengenannten Regelverfahrens prozeßbegleitend in einer Vorhalteposition 18 gegenüber der (bewegten) Karosserie 1 gehalten werden, so daß der Werkzeug/Sensor-Verbund den Bewegungen des Karosserie 1 folgt. Somit braucht die Karosserie 1 während des Positionier- und Bearbeitungsvorgangs nicht stationär aufgespannt sein, sondern kann sich (beispielsweise durch Weitertransport auf dem Montageband) gegenüber dem (eventuell mitbewegten) Roboter 11 bewegen. Dies setzt lediglich voraus, daß Änderungen in der Relativlage zwischen Karosserie 1 und Roboter 11 langsamer erfolgen als die Messung und Positionsregelung des Werkzeug/Sensor-Verbunds gegenüber der Karosserie 1.

Als Sensoren 14 zur Erfassung der Ist-Lage des Werkzeugs 9 gegenüber dem Referenzbereich 8 können - neben den oben konkret beschriebenen (Laser-) Triangulationssensoren 14' - auch andere optische Sensoren zum Einsatz kommen. Beispielsweise können flächenhaft messende CCD-Kameras als Sensoren eingesetzt werden, mit Hilfe derer (in Kombination mit geeigneten Bildauswertungsalgorithmen) die Raumlagen von Kanten, Löchern etc. als Meßgrößen generiert werden kann. Prinzipiell können beliebige taktile und/oder berührungsfreie Meßsysteme verwendet werden, wobei die Auswahl der geeigneten Sensoren stark vom jeweiligen Einsatzfall abhängt.

Die Erfindung ist - neben dem in den Anwendungsbeispielen beschriebenen robotergeführten Präge/Stanzwerkzeug - auf ein weites Spektrum von robotergeführten Bearbeitungswerkzeugen anwendbar. Unter "robotergeführten" Werkzeugen sind im Zusammenhang der vorliegenden Anmeldung ganz allgemein Werkzeuge zu verstehen, die auf einem mehrachsigen Manipulator, insbesondere einem sechsachsigen Industrieroboter 11, montiert sind.

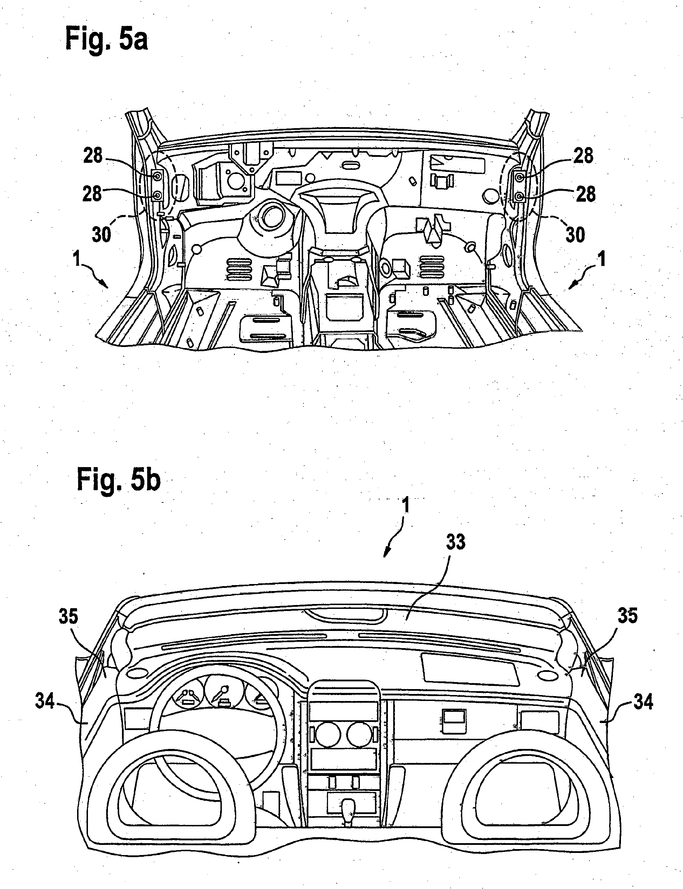

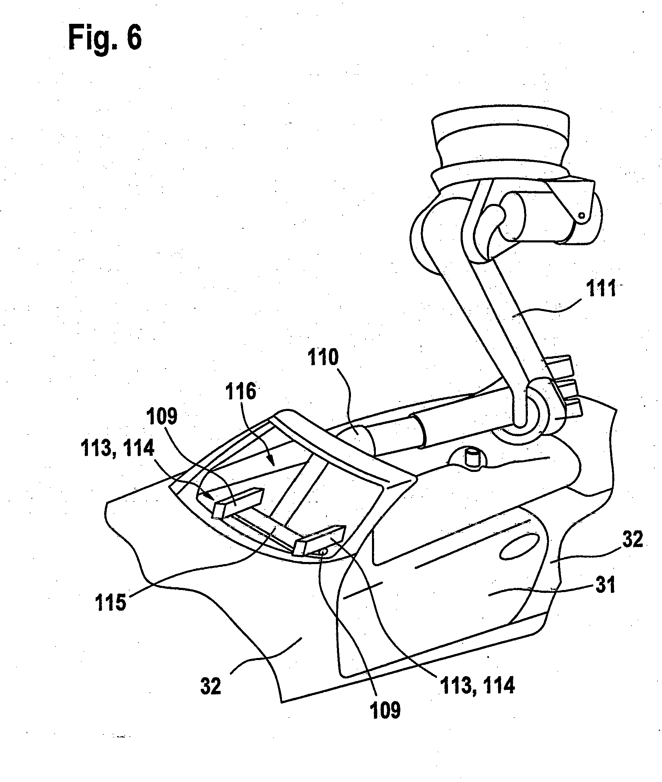

Ein weiteres Ausführungsbeispiel ist in den Figuren 5a, 5b und 6 dargestellt: Figur 5a zeigt eine Aufsicht auf eine vordere Stirnwand 27 einer Fahrzeugkarosserie 1, an die im Zuge der Fahrzeugmontage ein Cockpitmodul 33 montiert wird (siehe Figur 5b). Um ein qualitativ hochwertiges Aussehen des Innenbereichs der Karosserie 1 zu erreichen, muss das Cockpitmodul 33 dabei in einer solchen Weise gegenüber den Innenseiten 34 der Fahrertüren 31 ausgerichtet werden, dass zwischen dem Cockpitmodul 33 und den benachbarten Bereichen 35 der Türinnenseiten 34 optimierte Spalt- und Übergangsmaße vorliegen. Zur lagegenauen Montage des Cockpitmoduls 33 werden in Seitenbereichen 30 der Stirnwand 27 Bolzen 28 als Justierelemente angebracht, die die Position des Cockpits während der End-montage definieren. Diese Bolzen 28 werden zu einem Zeitpunkt in die Karosserie 1 eingebracht, zu dem die Türen 31 bereits eingebaut und zur den benachbarten Bereichen 32 der Fahrzeugaußenhaut ausgerichtet wurden (siehe Figur 6). Die Bolzen 28 werden mit Hilfe des Bolzenschweißens an der Stirnwand 27 befestigt.

Zur lagegenauen Ausrichtung und Befestigung der Bolzen 28 kommt ein (schematisch in Figur 6 dargestellter) Werkzeug/Sensor-Verbund 116 zum Einsatz, der an der Hand 110 eines Industrieroboters 111 befestigt ist. Der Werkzeug/Sensor-Verbund 116 umfasst ein Gestänge 115, an dem zwei Bolzenschweißgeräte 109 sowie ein Sensorsystem 113 mit zwei optischen Sensoren 114 befestigt sind. Die Sensoren 114 sind in einer solchen Weise auf dem Gestänge ausgerichtet, dass sie Messwerte der Seitenbereiche 30 der Stirnwand 27 und der benachbarten Bereiche 35 der Türen 31 aufnehmen können, wenn der Werkzeug/Sensor-Verbund 116 - wie in Figur 6 gezeigt - im Innenraum der Karosserie 1 an die Stirnwand 27 angenähert wird.

Zum "Einlernen" dieser Bearbeitungsaufgabe wird - analog zu dem oben beschriebenen Verfahren - zunächst eine Einrichtphase durchlaufen: Der Werkzeug/Sensor-Verbund 116 wird dabei in der in Figur 6 gezeigten Vorhalteposition gegenüber der Stirnwand 27 ("Master"-) Karosserie 1' ausgerichtet, und es werden Messwerte der Sensoren 114 in dieser Lage des Werkzeug/Sensor-Verbunds 116 aufgenommen. Anschließen werden weitere Messungen durchgeführt, für die der Werkzeug/Sensor-Verbund 116 entlang bekannter Bahnen systematisch verändert wird. Aus den Messdaten wird die Jacobimatrix des Werkzeug/Sensor-Verbunds 116 berechnet und in einer Auswerteeinheit des Sensorsystems 113 abgelegt. Weiterhin werden (interaktiv oder off-line) die gesteuert zu durchlaufenden Abschnitte der Verfahrbahn des Werkzeug/Sensor-Verbunds 116 eingelernt.

In der Arbeitsphase werden dem Roboter 111 Karosserien 1 zugeführt, und für jede Karosserie 1 wird die in der Einrichtphase generierte Verfahrbahn durchlaufen. Dabei wird der Werkzeug/Sensor-Verbund zunächst über einen Regelprozess in der Vorhalteposition gegenüber der Stirnwand 27 positioniert, in der der Werkzeug/Sensor-Verbund 116 optimal gegenüber den der Stirnwand 27 benachbarten Bereichen 35 der Türinnenseite 34 ausgerichtet ist; dieser Regelprozeß verläuft analog zu der oben beschriebenen Positionierphase (Verfahrbahn-Abschnitt II). Ausgehend von dieser Vorhalteposition wird dann eine Bearbeitungsphase (Verfahrbahn-Abschnitt III) durchlaufen, im Zuge derer der Werkzeug/Sensor-Verbund 116 an die Stirnwand 27 heranbewegt wird, so daß mit Hilfe der Bolzenschweißgeräte 109 die Bolzen 28 in den ihnen gegenüberliegenden Stellen der Seitenbereiche 30 gesetzt werden können. Das "Ausformen des Verbindungsbereichs" entspricht in diesem Fall somit dem lagegenauen Setzen der Bolzen 28 im Seitenbereich 30. Die Position der Bolzen 28 ist somit "optimal" zu den benachbarten Innenbereichen 35 der Fahrertüren 31 ausgerichtet. Somit ist gewährleistet, daß das Cockpitmodul 33, das in Rahmen der Endmontage auf die Bolzen 28 aufgesteckt wird, das gewünschte Spaltmaß und Übergangsmaße gegenüber den Türinnenwänden 35 aufweist.

## Patentansprüche

1. Verfahren zum Herstellen eines Verbindungsbereichs (4) auf einem Werkstück (1), insbesondere auf einem Karosserieblech, welcher Verbindungsbereich (4) lagegenau gegenüber einem Referenzbereich (8) auf dem Werkstück (1) positioniert ist,
- bei welchem Verfahren zur Ausformung des Verbindungsbereichs (4) ein robotergeführtes Bearbeitungswerkzeug (9,109) verwendet wird, welches mit einem mindestens einen Sensor (14,14',14",114) umfassenden und mit dem Werkzeug (9,109) fest verbundenen Sensorsystem (13,113) einen Werkzeug/Sensor-Verbund (16,116) bildet,
- wobei der Werkzeug/Sensor-Verbund (16,116) zunächst im Rahmen einer Positionierphase (II) ausgehend von einer Näherungsposition (24), welche unabhängig von der Lage des Werkstücks (1) im Arbeitsraum (23) des Roboters (11) ist, in eine Vorhalteposition (18) bewegt wird, in welcher der Werkzeug/Sensor-Verbund (16,116) lagegenau gegenüber dem Referenzbereich (8) des Werkstücks (1) ausgerichtet ist,
- wobei zum Anfahren der Vorhalteposition (18) ein iterativer Regelvorgang durchlaufen wird, im Zuge dessen
- ein (Ist-)Messwert des mindestens einen Sensors (14,14',14",114) erzeugt wird,
- dieser (Ist-)Messwert mit einem im Rahmen einer Einrichtphase erzeugten (Soll-)Messwert verglichen wird,
- aus der Differenz zwischen (Ist-)Messwert und (Soll-) Messwert unter Verwendung einer im Rahmen der Einrichtphase berechneten Jacobi-Matrix ein Verschiebungsvektor des Werkzeug/Sensor-Verbunds (16,116) berechnet wird,
- der Werkzeug/Sensor-Verbund (16,116) um diesen Verschiebungsvektor verschoben wird,
- und wobei der Werkzeug/Sensor-Verbund (16,116) anschließend in einer Bearbeitungsphase (III) ausgehend von dieser Vorhalteposition (18) robotergesteuert entlang einer Bearbeitungsbahn geführt wird, im Zuge derer der Verbindungsbereich (4) auf dem Werkstück (1) ausgeformt wird,
**dadurch gekennzeichnet,**
- **dass** in der Positionierphase (II) mit Hilfe der Sensoren (14,14',14",114) Formfehler in Referenzbereichen (8) des Werkstücks (1) erfasst und/oder kompensiert werden.

2. Verfahren nach Anspruch 1
**dadurch gekennzeichnet,**
**dass** der iterative Regelvorgang abgebrochen wird, wenn
- entweder die Abweichung zwischen (Soll-)Messwert und (Ist-)Messwert unterhalb eines vorgegebenen Schwellwerts liegt, oder
- die bei aufeinanderfolgenden Iterationsschritten zu erreichende Reduktion dieser Abweichung unterhalb eines vorgegebenen Schwelle liegt.

3. Verfahren nach Anspruch 1 oder 2,
**dadurch gekennzeichnet,**
**dass** die Positionierphase (II) und die Bearbeitungsphase (III) überlappend zueinander erfolgen.

4. Verfahren nach einem der vorangehenden Ansprüche,
**dadurch gekennzeichnet,**
**dass** zur Kommunikation zwischen der Steuervorrichtung (12) des Roboters (11) und der Auswerteeinheit (20) des Sensorsystems (13) eine TCP/IP-Schnittstelle verwendet wird.

5. Verfahren nach einem der vorangehenden Ansprüche,
**dadurch gekennzeichnet,**
**dass** zur Positionierung des Werkzeug/Sensor-Verbunds (16,116) gegenüber unterschiedlichen Karosserietypen oder gegenüber unterschiedlichen Referenzbereichen (8) desselben Karosserietyps die Messwerte unterschiedlicher Einzelsensoren (14,14",114) des Sensorsystems (13,113) zur Positionsregelung verwendet werden.

6. Verwendung des Verfahrens nach einem der Ansprüche 1 bis 5, **dadurch gekennzeichnet,**
**dass** das Verfahren zur Herstellung von Verbindungsbereichen (4) in einem Heckleuchtenbereich (3) einer Fahrzeugkarosserie (1) verwendet wird.

7. Verwendung des Verfahrens nach einem der Ansprüche 1 bis 5, **dadurch gekennzeichnet,**
**dass** das Verfahren zum lagegenauen Anschweißen von Justierelementen (28) zur Ausrichtung eines Cockpits (33) an einer vorderen Stirnwand (27) einer Fahrzeugkarosserie (1) verwendet wird.

8. Vorrichtung zum Herstellen eines Verbindungsbereichs (4) auf einem Werkstück (1), insbesondere einem Karosserieteil,
- mit einem mit Hilfe eines Roboters (11,111) geführten Bearbeitungswerkzeug (9,109),
- mit einem Sensorsystem (13,113), welches mindestens einen Sensor (14,14',14",114) umfasst und welches fest mit dem Bearbeitungswerkzeug (9,109) verbunden ist, so dass Sensorsystem (13,113) und Werkzeug (9,109) einen Werkzeug/Sensor-Verbund (16,116) bilden,
- mit einer Auswerteeinheit (20) zur Auswertung der Messwerte des Sensorsystems (13,113),
- mit einer Steuervorrichtung (12) zur Steuerung des Roboters (11) und des Bearbeitungswerkzeugs (9,109), mit deren Hilfe der Werkzeug/Sensor-Verbund (16,116) in einer Vorhalteposition gegenüber dem Referenzbereich (8) des Werkstücks positionierbar ist, in der der Werkzeug/Sensor-Verbund (16,116) lagegenau gegenüber einem Referenzbereich (8) des Werkstücks (1) ausgerichtet ist,
- mit Mitteln die einen iterativen Regelvorgang zum Anfahren der Vorhalteposition durchführen, unter Verwendung einer in einer Einrichtphase ermittelten Jaco-bi-Matrix und unter Differenzbildung zwischen Messwerten des Sensorsystems (13,113) und im Rahmen der Einrichtphase erzeugter (Soll-)Messwerte
- und mit Mitteln zur Ermittlung und/oder Kompensation von Formfehlern in Referenzbereichen (8) des Werkstücks (1) aus den Messwerten der Sensoren (14,14',14",114).

9. Vorrichtung nach Anspruch 8,
**dadurch gekennzeichnet,**
**dass** mindestens einer der Sensoren (14,14',14",114) ein metrisch unkalibrierter Sensor ist.

10. Vorrichtung nach Anspruch 8 oder 9,
**dadurch gekennzeichnet,**
**dass** das Bearbeitungswerkzeug (9) ein Präge-/Stanzwerkzeug ist.

11. Vorrichtung nach Anspruch 8 oder 9,
**dadurch gekennzeichnet,**
**dass** das Bearbeitungswerkzeug (109) ein Bolzenschweißgerät ist.

12. Vorrichtung nach einem der Ansprüche 8 bis 11,
**dadurch gekennzeichnet,**
**dass** der mindestens eine Sensor (14,14',14") ein punktförmig messender Triangulationssensor ist.

13. Vorrichtung nach einem der Ansprüche 8 bis 11,
**dadurch gekennzeichnet,**
**dass** der mindestens eine Sensor (14,14',14",114) ein flächenhaft messender optischer Sensor ist.

## Claims

1. Method for the production of a joint region (4) on a work piece (1), in particular on an autobody work piece, which joint region (4) is positioned under positional precision with respect to a reference region (8) on the work piece (1),
- in which method for forming out the joint region (4) a robot-guided machining tool (9, 109) is utilized, which, with a sensor system (13, 113) comprising at least one sensor (14, 14', 14", 114) and permanently fixed with the tool (9, 109), forms a tool/sensor arrangement (16, 116),
- wherein, starting from an approximation position (24) that is independent of the position of the work piece (1) in the working space (23) of the robot (11), the tool/sensor arrangement (16, 116) within the scope of a positioning phase (II) is first moved into a holding position (18) in which the tool/sensor arrangement (16, 116) is oriented positionally precisely with respect to the reference region (8) of the work piece (1),
- wherein for approaching the holding position (18) an iterative regulation process is passed through, in the course of which
- an (actual) measured value of the at least one sensor (14, 14', 14", 114) is generated,
- this (actual) measured value is compared with a (nominal) measured value generated in the course of a setup phase,
- by utilizing a Jacobi matrix calculated in the course of the setup phase a displacement vector of the tool/sensor arrangement (16, 116) is calculated from the difference of the (actual) measured value and the (nominal) measured value,
- the tool/sensor arrangement (16, 116) is displaced by this displacement vector,
- and wherein, starting from this holding position (18), the tool/sensor arrangement (16, 116) in a machining phase (III) is subsequently guided under robot control along a machining path, in the course of which the joint region (4) is formed on the work piece (1),
***characterized in that***
- in the positioning phase (II) errors of form in the reference regions (8) of the work piece (1) are registered and/or compensated with the aid of the sensors (14, 14', 14", 114).

2. Method as in claim 1,
***characterized in that***
the iterative regulation process is terminated if
- either the variance between the (nominal) measured value and the (actual) measured value is below a predetermined threshold value, or
- the reduction of this variance to be achieved in successive iteration steps is below a predetermined threshold.

3. Method as in claim 1 or 2,
***characterized in that***
the positioning phase (II) and the machining phase (III) take place overlapping one another.

4. Method as in one of the preceding claims,
***characterized in that***
for the communication between the control device (12) of the robot (11) and the analysis unit (20) of the sensor system (13) a TCP/IP interface is utilized.

5. Method as in one of the preceding claims,
***characterized in that***
for the positioning of the tool/sensor arrangement (16, 116) with respect to various types of automotive bodies, or with respect to various reference regions (8) of the same type of automotive body, the measured values of various individual sensors (14, 14', 14", 114) of the sensor system (13, 113) are utilized for the position regulation.

6. Use of the method as in one of claims 1 to 5,
***characterized in that***
the method is utilized for the production of joint regions (4) in a tail lamp region (3) of a motor vehicle body (1).

7. Use of the method as in one of claims 1 to 5,
***characterized in that***
the method is utilized for the positionally precise welding of adjustment elements (28) for the orientation of a cockpit (33) on a forward end wall of a motor vehicle body (1).

8. Device for the production of a joint region (4) on a work piece (1), in particular an automotive body,
- with a machining tool (9, 109) guided with the aid of a robot (11,111),
- with a sensor system (13, 113) comprising at least one sensor (14, 14', 14", 114) and permanently fixed to the machining tool (9, 109) such that the sensor system (13, 113) and tool (9, 109) form a tool/sensor arrangement (16, 116),
- with an analysis unit (20) for analyzing the measured values of the sensor system (13, 113),
- with a control device (12) for the control of the robot (11) and of the machining tool (9, 109), with the aid of which the tool/sensor arrangement (16, 116) can be positioned in a holding position 18 with respect to the reference region (8) of the work piece (1), in which position the tool/sensor arrangement (16, 116) is oriented positionally precise with respect to a reference region (8) of the work piece (1),
- with means for carrying out an iterative regulation process for approaching the holding position by using a Jacobi matrix determined in a setup phase and the difference formation between actual measured values of the sensor system (13, 113) and (nominal) measured values generated within the scope of the setup phase, and
- with means for determining and/or compensating errors of form in reference regions (8) of the work piece (1) based on the measured values of the sensors (14, 14', 14", 114).

9. Device as in claim 8,
***characterized in that***
at least one of the sensors (14, 14', 14", 114) is a metrically uncalibrated sensor.

10. Device as in claim 8 or 9,
***characterized in that***
the machining tool (9) is an embossing-/punching tool.

11. Device as in claim 8 or 9,
***characterized in that***
the machining tool (109) is a stud welding unit.

12. Device as in one of claims 8 to 11,
***characterized in that***
the at least one sensor (14, 14', 14", 114) is a point triangulation measurement sensor.

13. Device as in one of claims 8 to 11,
***characterized in that***
the at least one sensor (14, 14', 14", 114) is an area measurement optic sensor.

## Revendications

1. Procédé de réalisation d'une zone de jonction (4) sur une pièce (1), en particulier sur une tôle de carrosserie, laquelle zone de jonction (4) étant positionnée exactement par rapport à une zone de référence (8) sur une pièce (1),
- procédé dans lequel la zone de jonction (4) est réalisée à l'aide d'un outil robotisé (9, 109) qui forme un ensemble outil/capteur(s) (16, 116) avec un système de capteur (13, 113) comprenant au moins un capteur (14, 14', 14", 114) et solidaire de l'outil (9, 109),
- l'ensemble outil/capteur (16, 116), dans le cadre d'une phase de positionnement (II), étant d'abord déplacé à partir d'une position rapprochée (24) et indépendante de la position de la pièce (1) dans l'espace d'opération (23) du robot (11), vers une position d'attente (18), dans laquelle l'ensemble outil/capteur (16, 116) est exactement positionné par rapport à la zone de référence (8) de la pièce (1),
- pour aborder la position d'attente (18), un processus de réglage itératif s'effectue, lors duquel
- une valeur de mesure (réelle) du capteur (14, 14', 14", 114) est générée,
- ladite valeur (réelle) est comparée à une valeur de mesure (désirée) générée dans le cadre d'une phase de réglage,
- un vecteur déplacement de l'ensemble outil/capteur (16, 116) est calculé à partir de la différence entre la valeur de mesure (réelle) et la valeur de mesure (désirée) en utilisant une matrice jacobienne calculée dans le cadre de la phase de réglage,
- l'ensemble outil/capteur (16, 116) est décalé en fonction dudit vecteur de déplacement,
- et l'ensemble outil/capteur (16, 116), dans une phase de traitement (III) subséquente, étant guidé par robot, à partir de ladite position d'attente (18), le long d'une trajectoire de traitement, au cours de laquelle la zone de jonction (4) est formée sur la pièce (1),
**caractérisé en ce que,**
- dans la phase de positionnement (II), les défauts de forme dans les zones de référence (8) de la pièce (1) sont détectés à l'aide des capteurs (14, 14', 14", 114) et/ou compensés.

2. Procédé selon la revendication 1,
**caractérisé en ce que**
le processus de réglage itératif est interrompu,
- lorsque l'écart entre la valeur de mesure (désirée) et la valeur de mesure (réelle) est inférieur à un seuil prédéterminé,
- ou lorsque la réduction de cet écart à l'issue des étapes d'itération successives est inférieure à un seuil prédéterminé.

3. Procédé selon l'une des revendications 1 ou 2,
**caractérisé en ce que**
la phase de positionnement (II) et la phase de traitement (III) se chevauchent.

4. Procédé selon l'une des revendications précédentes,
**caractérisé en ce que**
l'on utilise une interface TCP/IP pour la communication entre le moyen de commande (12) du robot (11) et l'unité d'évaluation (20) du système de capteur (13).

5. Procédé selon l'une des revendications précédentes,
**caractérisé en ce que,**
pour positionner l'ensemble outil/capteur (16, 116) par rapport à des types de carrosserie différents ou par rapport à des zones de référence (8) différentes d'un même type de carrosserie, l'on utilise les valeurs de mesure de différents capteurs individuels (14, 14", 114) du système de capteurs (13, 113) pour le réglage de la position.

6. Utilisation du procédé selon l'une des revendications 1 à 5,
**caractérisée en ce que**
le procédé pour réaliser des zones de jonction (4) est utilisé dans une zone des feux arrière (3) d'une carrosserie de véhicule (1).

7. Utilisation du procédé selon l'une des revendications 1 à 5,
**caractérisée en ce que**
le procédé est utilisé pour le soudage précis d'éléments d'ajustage (28) destinés à l'orientation d'un cockpit (33) sur la paroi frontale (27) d'une carrosserie de véhicule (1).

8. Dispositif destiné à réaliser une zone de jonction (4) sur une pièce (1), en particulier sur une pièce de carrosserie, comprenant
- un outil (9, 109) commandé par un robot (11, 111)
- un système de capteur (13, 113) comprenant au moins un capteur (14, 14', 14", 114) et solidaire de l'outil (9, 109) de sorte que le système de capteur (13, 113) et l'outil (9, 109) forment un ensemble outil/capteur,
- une unité d'évaluation (20) pour évaluer les valeurs de mesure du système de capteur (13, 113),
- un moyen de commande (12) pour commander le robot (11) et l'outil (9, 109), à l'aide desquels l'ensemble outil/capteur (16, 116) peut être déplacé vers une position d'attente par rapport à la zone de référence (8) des pièces, dans laquelle l'ensemble outil/capteur (16, 116) est exactement positionné par rapport à la zone de référence (8) de la pièce (1),
- des moyens mettant en oeuvre un processus de réglage itératif pour aborder la position d'attente en utilisant un matrice jacobienne calculée au cours d'une phase de réglage et en formant la différence entre les valeurs de mesure du système de capteur (13, 113) et les valeurs de mesure (désirées) générées dans le cadre de la phase de réglage,
- ainsi que des moyens pour déterminer et/ou compenser les défauts de forme dans les zones de référence (8) de la pièce (1) à partir des valeurs de mesure des capteurs (14, 14', 14", 114).

9. Dispositif selon la revendication 8,
**caractérisé en ce que**
au moins l'un des capteurs (14, 14', 14", 114) est un capteur non calibré métriquement.

10. Dispositif selon l'une des revendications 8 ou 9,
**caractérisé en ce que**
l'outil (9) est un outil d'estampage/découpage.

11. Dispositif selon l'une des revendications 8 ou 9,
**caractérisé en ce que**
l'outil (109) est un appareil de soudage de goujons.

12. Dispositif selon l'une des revendications 8 à 11,
**caractérisé en ce que**
le au moins un capteur (14, 14', 14") est un capteur à triangulation de mesure ponctuelle.

13. Dispositif selon l'une des revendications 8 à 11,
**caractérisé en ce que**
le au moins un capteur (14, 14', 14") est un capteur optique de mesure surfacique.
